# EUROPÄISCHE PATENTSCHRIFT

(11) **EP 4 636 712 B1**
(45) Veröffentlichungstag und Bekanntmachung des Hinweises auf die Patenterteilung: **10.06.2026**
(21) Anmeldenummer: 25169311.5
(22) Anmeldetag: 09.04.2025
(51) Int. Cl.: G06V 20/52, G06K 7/14

(54) **VERFAHREN ZUM KONFIGURIEREN EINER ERFASSUNGSVORRICHTUNG, ERFASSUNGSVORRICHTUNG UND COMPUTERPROGRAMMPRODUKT**
METHOD FOR CONFIGURING A SENSING DEVICE, SENSING DEVICE AND COMPUTER PROGRAM PRODUCT
PROCÉDÉ DE CONFIGURATION D'UN DISPOSITIF DE DÉTECTION, DISPOSITIF DE DÉTECTION ET PRODUIT DE PROGRAMME INFORMATIQUE

(30) Priorität: 17.04.2024 DE 102024110704
(43) Veröffentlichungstag der Anmeldung: 22.10.2025
(73) Patentinhaber: SICK AG, 79183 Waldkirch (DE)
(72) Erfinder: Mahler, Jan, 79292 Pfaffenweiler (DE)
(74) Vertreter: Manitz Finsterwald Patent- und Rechtsanwaltspartnerschaft mbB

(56) Entgegenhaltungen:
- EP-B1- 2 367 151
- US-A1- 2021 352 214

## Beschreibung

Die vorliegende Erfindung betrifft ein Verfahren zum Konfigurieren einer Erfassungsvorrichtung, die einem Objekt, welches mit einem Code zu seiner Identifizierung versehen ist und durch die Erfassungsvorrichtung hindurch oder daran vorbei befördert wird, diesen Code zuordnet, eine Erfassungsvorrichtung und ein Computerprogrammprodukt.

Die Erfindung wird durch die angehängten Ansprüche definiert.

Im Bereich der Fertigungsautomatisierung und/oder Logistikautomatisierung werden typischerweise Objekte verschiedener Größen und Ausführungen, beispielsweise Pakete, in einem durchgängigen Strom von derartigen Objekten identifiziert. Dazu ist jedes Objekt mit einem Code, beispielsweise einem Strichcode, versehen, welcher codifizierte Informationen zu dem Objekt enthält. Der Fluss von Objekten wird mit Hilfe eines Fördermittels, zum Beispiel eines Förderbandes oder eines Industriefahrzeugs, bewegt. Die Objekte sind dabei so angeordnet, dass zumindest ein kleiner Zwischenraum zwischen zwei hintereinanderliegenden Objekten besteht. Die Objekte berühren sich nicht und liegen auch nicht nebeneinander. Im Rahmen der Fertigungs- oder Logistikautomatisierung besteht ein Schritt darin, jedes einzelne Objekt zu identifizieren, indem der auf dem Objekt angebrachte Code dem Objekt zugeordnet wird, so dass anschließend der Code decodiert und der Code-Inhalt eindeutig dem entsprechenden Objekt zugeordnet werden kann. Die vorliegende Anmeldung verwendet hierfür bildbasierte Codelesetechniken. Bei der automatischen Zuweisung von Codes zu Objekten können folgende Probleme auftreten: ein Code wird erkannt, jedoch keinem Objekt zugeordnet; ein Code wird einem falschen Objekt zugeordnet; oder ein Code wird mehreren Objekten zugeordnet. Eine fehlende Zuordnung führt zu höheren Kosten, da hier ein manuelles Eingreifen in den automatisierten Prozess zur Korrektur der Zuweisung notwendig ist. Eine falsche Zuweisung oder eine Mehrfachzuweisung können sogar noch schlimmere Probleme hervorrufen, da sie unter Umständen zu einer falschen Weiterleitung des betroffenen Objekts führen können.

Aus dem Stand der Technik sind Codelesevorrichtungen bekannt, die den Objekterkennungs- und Codelesevorgang starten, sobald die Annäherung eines Objekts an die Lesevorrichtung durch ein entsprechendes Triggersignal angezeigt wird. Die Annäherung eines auf einem Förderband transportierten Objekts wird beispielsweise durch eine Lichtschranke erkannt. Nach der Lichtschranke passiert das betreffende Objekt das eigentliche Lesegerät, beispielsweise eine Kamera. Typischerweise ist die Lichtschranke außerhalb also vor dem Sichtfeld des Codelesers montiert, weshalb der Lesevorgang erst nach einer gewissen Verzögerungszeit gestartet werden kann, um die oben genannten Probleme einer fehlerhaften Zuordnung von Code zu Objekt zu vermeiden.

Aus dem Stand der Technik ist es zudem bekannt, diese Verzögerungszeit manuell zu bestimmen, beispielsweise durch Ausprobieren im Rahmen eines Versuchund Irrtumsverfahrens, das auf dem Leseergebnis basiert, oder durch Messen des Abstandes zwischen Lichtschranke und Lesegerät und Umsetzen desselben in eine Verzögerungszeit. Alternativ kann diese Vermessung auch unter Verwendung von Weltkoordinaten vorgenommen werden. Diese bekannten Maßnahmen zur Kalibrierung sind jedoch zeit- und kostenintensiv und für Nicht-Fachleute meist zu kompliziert. Hinzu kommt, dass die Genauigkeit einiger der bekannten Maßnahmen oft für die Anwendung nicht ausreicht.

EP 2 367 151 B1 beschreibt eine Vorrichtung zur Bildverarbeitung, die zur Überprüfung von auf einem Fließband transportierten Produkten eingesetzt wird. In einem Adjustment mode werden nach dem Erzeugen eines Triggersignals mehrere Bilder von Gegenständen aufgenommen. Anschließend stellt ein Benutzer die Verzögerungszeit durch Auswahl eines geeigneten Bildes ein. Dabei wird das Bild, welches zum Zeitpunkt des Triggersignals aufgenommen wurde, als Referenz bzw. Zeitbasis verwendet und muss den Gegenstand im Zentrum des Bildes zeigen. Die das Triggersignal generierende Lichtschranke befindet sich im Erfassungsbereich der Kamera.

Eine Aufgabe der vorliegenden Erfindung besteht folglich darin, ein gegenüber dem bekannten Stand der Technik verbessertes Verfahren zum Konfigurieren einer Erfassungsvorrichtung und eine verbesserte Erfassungsvorrichtung anzugeben.

Die Aufgabe wird gelöst durch ein Verfahren gemäß Anspruch 1, durch eine Vorrichtung gemäß Anspruch 9 sowie durch das Computerprogrammprodukt gemäß Anspruch 14. Weiterbildungen und Ausgestaltungen der Erfindung sind in den Unteransprüchen angegeben.

In einer Ausführungsform ist ein Verfahren zum Konfigurieren einer Erfassungsvorrichtung definiert. Die Erfassungsvorrichtung ordnet einem Objekt, welches mit einem Code zu seiner Identifizierung versehen ist und relativ zu der Erfassungsvorrichtung, also beispielsweise durch die Erfassungsvorrichtung hindurch, daran vorbei, darunter hinweg oder darüber hinweg, gefördert wird, diesen Code zu. Das Verfahren weist folgende Schritte auf:
Empfangen eines Triggerstartsignals,
Aufnahme einer Sequenz von Einzelbildern eines Testobjekts, welches relativ zu der Erfassungsvorrichtung, also beispielsweise durch die Erfassungsvorrichtung hindurch, daran vorbei, darunter hinweg oder darüber hinweg, befördert wird, Auswahl eines ersten und eines zweiten Bildes aus der Sequenz von Einzelbildern,
Ermitteln einer ersten Verzögerung zwischen dem Empfang des Triggerstartsignals und der Aufnahme des ausgewählten ersten Bildes, und
Einstellen eines Startzeitpunkts, an oder nach dem eine Aufnahme von Einzelbildern eines Objekts im laufenden Betrieb der Erfassungsvorrichtung gestartet wird, in Abhängigkeit der ersten Verzögerung.
Dabei erfolgt die Auswahl des ersten und des zweiten Bildes gemäß mindestens eines einstellbaren Kriteriums. Dabei ist das mindestens eine einstellbare Kriterium so definiert, dass das erste ausgewählte Bild in etwa eine erste Hälfte des Bildes des Testobjekts beinhaltet. Das zweite ausgewählte Bild beinhaltet in etwa eine zweite Hälfte des Bildes des Testobjekts.

Das vorgeschlagene Verfahren ermöglicht die Auswahl des ersten und des zweiten Bildes in geeigneter Art und Weise während eines Testdurchlaufs eines Testobjekts durch die Erfassungsvorrichtung. Auf Basis dieser Auswahl wird automatisch die erste Verzögerung bestimmt, welche im nachfolgenden laufenden Betrieb der Erfassungsvorrichtung den Startzeitpunkt der Aufnahme zum Erfassen eines Objekts und seines Codes, sowie die Zuordnung desselben zu dem Objekt zeitlich steuert. Die Konfiguration wird durch das vorgeschlagene Verfahren erheblich vereinfacht. Vorteilhafterweise kann die Konfiguration auch durch Nichtfachleute vorgenommen werden. Des Weiteren wird der Konfigurationsaufwand deutlich reduziert.

Die Erfassungsvorrichtung kann auch als Objekt-Code-Zuweisungsvorrichtung bezeichnet werden. Die eingangs erwähnten Definitionen sind auch auf die folgenden Ausführungen zutreffend, sofern nichts anderes bestimmt wird.

Gemäß einer Weiterbildung ist ein Aufnahmeende, an oder vor dem die Aufnahme von Einzelbildern desselben Objekts im laufenden Betrieb beendet wird, voreingestellt. Alternativ wird das Aufnahmeende in Abhängigkeit einer zweiten Verzögerung zwischen dem Empfang des Triggerstartsignals und/oder eines zusätzlich empfangenen Triggerstoppsignals und dem zweiten ausgewählten Bild eingestellt.

Das Ermitteln der ersten Verzögerung zwischen Empfang des Triggerstartsignals und dem Aufnahmezeitpunkt des ausgewählten ersten Bildes und dem Ermitteln der zweiten Verzögerung zwischen dem Empfang des Triggerstoppsignals und dem Aufnahmezeitpunkt des zweiten ausgewählten Bildes bewirkt mit Vorteil, dass die Konfiguration unabhängig von der Länge des Objekts erfolgt. Vorabkenntnis oder Fachwissen sind hierfür vorteilhafterweise nicht erforderlich.

Beispielsweise entspricht die erste Verzögerung genau der Zeitspanne zwischen Triggerstartsignal und Aufnahme des ersten ausgewählten Bildes. Die zweite Verzögerung entspricht zum Beispiel genau der Zeitspanne zwischen der Aufnahme des zweiten ausgewählten Bildes und dem Triggerstoppsignal.

Der Ausdruck "in Abhängigkeit der ersten oder zweiten Verzögerung kann dabei so verstanden werden, dass der Startzeitpunkt und/oder das Aufnahmeende zeitlich genau die erste bzw. zweite Verzögerung nach z.B. dem Triggerstartsignal (oder dem Triggerstoppsignal) liegen. Ebenfalls ist es aber möglich, dass die erste und/oder zweite Verzögerung verkürzt oder verlängert wird, um den Startzeitpunkt und/oder das Aufnahmeende zu bestimmen. Das Verkürzen oder Verlängern kann grundsätzlich gemäß einer beliebigen für den jeweiligen Anwendungsfall festzulegenden Vorschrift erfolgen.

In einer Weiterbildung signalisiert das Triggerstartsignal eine Annäherung des Testobjekts oder eines Objekts im laufenden Betrieb, insbesondere die Annäherung eines Beginns des Testobjekts oder des Objekts, an die Erfassungsvorrichtung. Das Triggerstoppsignal signalisiert ein Ende des Testobjekts oder des Objekts.

Für das Konfigurationsverfahren wie vorgeschlagen wird ein Testobjekt, insbesondere nur ein einzelnes Testobjekt, eingesetzt, das einem im laufenden Betrieb typischerweise auftretenden Objekt entspricht. Beispielsweise ist das Testobjekt ein Paket, welches gewisse Abmaße bezüglich Länge, Breite und Höhe hat. Das Triggerstartsignal wird generiert, sobald eine Annäherung einer vorderen Kante dieses Testpakets detektiert wird. Entsprechend wird das Triggerstoppsignal generiert, sobald eine Abschlusskante des Testpakets erkannt wird.

Das vorgeschlagene Verfahren basiert dementsprechend auf einem getriggerten Lesevorgang, in welchem ein automatisch befördertes typisches Testobjekt zur Konfiguration verwendet wird.

Beispielsweise ist im ersten Bild das im Verhältnis zur Erfassungsvorrichtung beförderte Objekt bis zur Bildmitte oder Bildhälfte fortgeschritten. Die Objektvorderkante berührt somit die Bildmitte. Das Objekt befindet sich in der ersten Bildhälfte, jedoch nicht in der zweiten Bildhälfte. Im zweiten Bild hat sich das aus dem Sichtfeld der Erfassungsvorrichtung heraus beförderte Objekt bis zur Bildmitte entfernt. Die Objekthinterkante berührt somit die Bildmitte. Das Objekt befindet sich in der zweiten Bildhälfte, jedoch nicht in der ersten Bildhälfte. Dabei durchläuft die Objektvorderkante die Erfassungsvorrichtung zuerst, als früher als die Objekthinterkante. Bei einer anderen Einstellung des Kriteriums tritt auf dem ersten Bild das Objekt gerade in das Bild ein, beim zweiten Bild hat das Objekt das Bild vollständig verlassen.

Gemäß einer Weiterbildung beginnt die Aufnahme der Sequenz von Einzelbildern des Testobjekts unmittelbar nach dem Empfangen des Triggerstartsignals. Die Aufnahme endet nach einer vordefinierten Zeit oder einer vordefinierten Anzahl aufgenommener Einzelbilder. Bevorzugt werden dabei zunächst Einzelbilder ohne das Objekt bzw. ohne das Testobjekt aufgenommen. Anschließend können mehrere Bilder mit dem Testobjekt aufgenommen werden. Schließlich werden danach dann nochmals Bilder ohne das Objekt bzw. ohne das Testobjekt aufgenommen, wenn das Objekt bzw. Testobjekt den Sichtbereich bzw. das Sichtfeld der Kamera der Erfassungsvorrichtung wieder verlassen hat.

Typischerweise werden bei einer Aufnahmeframerate von 15 bis 30 Hz zwischen 10 und 60 Bilder aufgenommen. Die vordefinierte Zeit kann in etwa drei Sekunden sein.

Nach einem Testbetrieb, in dem das vorgeschlagene, erfindungsgemäße Verfahren zur Konfiguration eingesetzt wird, wird in den laufenden Betrieb oder Normalbetrieb umgeschaltet. Im Normalbetrieb wird dann der ermittelte Startzeitpunkt und das Aufnahmeende verwendet. Insbesondere kann auch im Normalbetrieb jeweils ein Triggerstartsignal empfangen werden, von welchem ausgehend dann der Startzeitpunkt und das Aufnahmeende ermittelt werden. Zwischen Startzeitpunkt und Aufnahmeende können ein oder mehrere Bilder erzeugt werden, die für die Codeerkennung genutzt werden. Im Normalbetrieb wird dann also aus zumindest einem zwischen Aufnahmestart und Aufnahmestopp aufgenommenen Bild der Code des Objekts oder Pakets ausgelesen und dem Objekt zugeordnet.

Gemäß einer Weiterbildung wird das Testobjekt und/oder das Objekt sowohl im Testbetrieb als auch im laufenden Betrieb durch ein Fördermittel im Verhältnis zur Erfassungsvorrichtung befördert. Insbesondere wird das Objekt und/oder das Testobjekt von einer ersten Position, in der das zumindest das empfangene Triggerstartsignal erzeugt wird, zu einer zweiten Position, in der die Aufnahme der Sequenz von Einzelbildern erfolgt, befördert. Das Fördermittel ist als Förderband, Roboter, fahrerloses Transportfahrzeug, sogenanntes Automated Guided Vehicle, AGV, als Gabelstapler oder als Hubwagen ausgeführt.

Ein Förderband transportiert beispielsweise das Objekt durch die Erfassungsvorrichtung hindurch oder darunter hinweg. Ein AGV, Roboter, oder Gabelstapler transportiert das Objekt an der Erfassungsvorrichtung vorbei. Geschwindigkeiten für die Bewegung, die jedes Objekt beziehungsweise Testobjekt hierbei erfährt, sind im Bereich von 0,5 bis 3,5 m/s und hängen von dem eingesetzten Fördermittel ab.

Das erfindungsgemäße Verfahren ist vorteilhafterweise auch geeignet für die Verwendung mit einem Fördermittel, welches nicht als Förderband ausgestaltet ist, und vereinfacht hier die Konfiguration erheblich.

Gemäß einer Weiterbildung erfolgt die Auswahl des ersten und des zweiten Bildes aus der Sequenz von Einzelbildern durch einen Benutzer, insbesondere mittels einer graphischen Benutzeroberfläche. Alternativ oder zusätzlich erfolgt diese Auswahl automatisiert unter Verwendung von Bildverarbeitungsalgorithmen, insbesondere Objekt- und Codeerkennungsalgorithmen, insbesondere in Form eines Vorschlags an den Benutzer, welcher vom Benutzer bestätigt oder abgeändert werden kann
Demgemäß wird das erste Bild wie bereits beschrieben durch einen Benutzer oder durch geeignete Bildverarbeitungsalgorithmen so ausgewählt, dass es im Wesentlichen die erste Hälfte des Testobjekts zeigt. Das zweite Bild wird ebenfalls entweder durch einen Benutzer oder mit Hilfe von Bildverarbeitungsalgorithmen so ausgewählt, dass es im Wesentlichen die zweite Hälfte des Testobjekts zeigt.

Dadurch, dass lediglich die Auswahl von zwei Einzelbildern anhand eines einfachen Kriteriums, z.B., "erste bzw. zweite Hälfte des Testobjekts auf dem Bild" für die Konfiguration der Erfassungsvorrichtung notwendig ist, wird die Konfiguration erheblich vereinfacht. Trotzdem ermöglicht sie eine optimale und hochgenaue Zuordnung von Codes zu Objekten im späteren laufenden Betrieb.

Bei der automatischen Auswahl des ersten und des zweiten Bildes werden bekannte Algorithmen zur Objekt- und Codeerkennung, beispielsweise eine Kantendetektion oder Schwellenwertbildung, eingesetzt. Es können auch andere Methoden zur Detektion von charakteristischen Merkmalen des Objekts, die beispielsweise auf einer Ecken-, Textur- oder/und Farbdetektion basieren, eingesetzt werden. Des Weiteren wird unter Umständen eine Hintergrundsubtraktion bzw. ein sogenanntes Frame Differencing zur Trennung von Hintergrund und Vordergrund Information verwendet, um bewegte Objekte zu detektieren und zu lokalisieren. Alternativ oder zusätzlich können hier Verfahren mit künstlicher Intelligenz, KI, eingesetzt werden, die vorab mit entsprechenden Testdaten (z.B. Bilder von Paketen bzw. Objekten) trainiert werden.

In einer möglichen Implementierung der bei der automatischen Auswahl verwendeten Codeerkennung werden zwei bekannte Codes mit unterschiedlichen Inhalten, beispielsweise einmal "Start-Verzögerung", und einmal "Stopp-Verzögerung", insbesondere speziell dafür vorgesehene Inbetriebnahmemuster, nahe der Vorderkante bzw. nahe der Hinterkante des Objekts platziert. Mit Hilfe von Decodieralgorithmen werden die Codes in den Bildern gefunden und lokalisiert. Die Lokalisierung des "Start-Verzögerung"-Codes in einem Bild in der Bildmitte bestimmt die Auswahl des ersten Bildes, wohingegen die Lokalisierung des "Stopp-Verzögerung" Codes in einem Bild in der Bildmitte die Auswahl des zweiten Bildes determiniert. Für kleinere Objekte genügt ein Code.

In einer Weiterbildung umfasst die Auswahl des ersten und des zweiten Bildes aus der Sequenz von Einzelbildern durch den Benutzer folgende Schritte:
Anzeigen aller Bilder der aufgenommenen Sequenz von Einzelbildern des Testobjekts, insbesondere in einem Fenster der graphischen Benutzeroberfläche, Anzeigen von Auswahlkriterien, insbesondere in dem oder einem weiteren Fenster der graphischen Benutzeroberfläche,

Auswählen des ersten und des zweiten Bildes aus den angezeigten Bildern gemäß den Auswahlkriterien durch den Benutzer, insbesondere mittels Tastatur, Maus, berührungsempfindlichem Bildschirm und/oder Spracheingabe.

Dem Benutzer werden die während der Konfigurationsphase aufgenommenen Einzelbildern beispielsweise in einem Fenster angezeigt. Gleichzeitig bekommt der Benutzer durch die angezeigten Auswahlkriterien, z.B. " im ersten Bild soll das Objekt in etwa zur Hälfte im Sichtfeld sein, im zweiten Bild soll das Objekt in etwa zur Hälfte aus dem Sichtfeld ausgetreten sein" eine Anleitung zur Auswahl des ersten und zweiten Bildes. Zusätzlich kann die Anleitung durch ein entsprechendes Piktogramm ergänzt und bildhaft dargestellt werden.

Der Benutzer kann somit in einfacher Art und Weise und ohne den Besitz von Voroder Fachwissen das erste und das zweite Bild so auswählen, dass die Erfassungsvorrichtung für den anschließenden laufenden Betrieb optimal konfiguriert ist. Aufwändige Messarbeiten oder teures Nacharbeiten aufgrund fehlerhafter Zuordnungen von Codes zu Objekten werden mit dem vorgeschlagenen Verfahren vorteilhafterweise eliminiert.

In Verbindung mit dem erfindungsgemäßen Verfahren können alle gängigen sowie auch zukünftige optische Codes, also eindimensionale, zweidimensionale oder dreidimensionale Codes, zum Einsatz kommen. Der Code kann also als Barcode bzw. Strichcode realisiert sein oder auch als Data Matrix bzw. QR-Code. Des Weiteren kann der Code als Stacked 1D Code, wie z.B. PDF417, ausgebildet sein.

Gemäß einer Weiterbildung wird die erste und/oder die zweite Verzögerung durch eine zeitliche Verzögerung oder durch eine räumliche Distanz realisiert.

Die räumliche Distanz kann auch als Wegverzögerung bezeichnet werden. Sie wird auf Basis der Geschwindigkeit, mit der das Testobjekt befördert wird, berechnet. Sofern diese Geschwindigkeit veränderlich ist, wird für diese Berechnung ein geeigneter Encoder eingesetzt. Mit Vorteil gewinnt die vorgeschlagene Lösung damit an Flexibilität.

Alternativ oder zusätzlich kann für das vorgeschlagene Verfahren ein mit einem Testcode versehenes Testobjekt verwendet werden. Dementsprechend beinhaltet dann das erste ausgewählte Bild in etwa eine erste Hälfte des Testcodes des Testobjekts. Das zweite ausgewählte Bild beinhaltet in etwa eine zweite Hälfte des Testcodes des Testobjekts.

Weiterer Gegenstand der vorliegenden Erfindung ist eine Erfassungsvorrichtung, die dazu eingerichtet ist, einem Objekt, welches mit einem Code zu seiner Identifizierung versehen ist und relativ zu der Erfassungsvorrichtung befördert wird, diesen Code zuzuordnen. Die Erfassungsvorrichtung umfasst ein Mittel zum Empfangen eines Triggerstartsignals, eine Kamera und eine Verarbeitungseinheit. Die Kamera ist dazu eingerichtet, eine Sequenz von Einzelbildern eines Testobjekts, welches relativ zur Erfassungsvorrichtung befördert wird, aufzunehmen. Die Verarbeitungseinheit ist dazu eingerichtet, auf Basis einer Auswahl eines ersten und bevorzugt eines zweiten Bildes aus der Sequenz von Einzelbildern eine erste Verzögerung zu ermitteln. Dabei ist die erste Verzögerung in Abhängigkeit des Triggerstartsignals und einer Aufnahme des ausgewählten ersten Bildes ermittelt. Die Verarbeitungseinheit ist ferner dazu eingerichtet, einen Startzeitpunkt der Kamera, an oder nach dem eine Aufnahme von Einzelbildern eines Objekts im laufenden Betrieb der Erfassungsvorrichtung gestartet wird, einzustellen. Dabei ist der Startzeitpunkt in Abhängigkeit der ermittelten ersten Verzögerung eingestellt. Dabei erfolgt die Auswahl des ersten und des zweiten Bildes gemäß mindestens eines einstellbaren Kriteriums. Dabei ist das mindestens eine einstellbare Kriterium so definiert, dass das erste ausgewählte Bild in etwa eine erste Hälfte des Bildes des Testobjekts beinhaltet. Das zweite ausgewählte Bild beinhaltet in etwa eine zweite Hälfte des Bildes des Testobjekts.

Die Erfassungsvorrichtung wird vor Aufnahme des laufenden Betriebs in einem Testdurchlauf unter Verwendung des Testobjekts konfiguriert. Dadurch werden auf einfache Art und Weise Startzeitpunkt für die Aufnahme durch die Kamera im laufenden Betrieb auf den Zeitpunkt des Triggerstartsignals abgestimmt. Im anschließenden laufenden Betrieb wird folglich sichergestellt, dass in der wie vorgeschlagen konfigurierten Erfassungsvorrichtung ein erkannter und decodierter Code dem richtigen Objekt zugeordnet wird. Auch Nicht-Fachleuten wird es mit der vorgeschlagenen Erfassungsvorrichtung ermöglicht, eine Konfiguration derselben mit lediglich geringem Zeitaufwand durchzuführen.

In einer Weiterbildung ist ein Aufnahmeende, an oder vor dem die Aufnahme von Einzelbildern desselben Objekts im laufenden Betrieb beendet wird, voreingestellt. Alternativ ist die Verarbeitungseinheit weiter dazu eingerichtet, das Aufnahmeende in Abhängigkeit einer zweiten Verzögerung zwischen dem Empfang des Triggerstartsignals oder eines zusätzlich empfangenen Triggerstoppsignals und dem zweiten ausgewählten Bild einzustellen.

Ein durch die Erfassungsvorrichtung hindurch befördertes Testobjekt löst also mit seinem vorderen Ende, welches die Erfassungsvorrichtung zuerst erreicht, das Triggerstartsignal aus. Die Kamera beginnt daraufhin, mehrere Einzelbilder des sich durch ihren Sichtbereich beförderten Testobjekts aufzunehmen. Sobald das hintere Ende des Testobjekts die Erfassungsvorrichtung erreicht, wird das Triggerstoppsignal erzeugt.

Es versteht sich, dass es (während der Konfiguration und/oder im Normalbetrieb) auch möglich ist, dass die Kamera dauerhaft und/oder wiederholt Bilder aufnimmt, auch wenn sich beispielsweise kein Objekt im Sichtbereich der Kamera befindet. Wenn hierin aber von der Erzeugung oder dem Beginn der Aufnahme von Bildern gesprochen wird, ist gemeint, dass dann Bilder erzeugt werden, die auf die hierin beschriebene Art und Weise verarbeitet werden. Eine dauerhafte und/oder wiederholte Bildaufnahme ist daher explizit auch durch die vorliegende Lehre mit eingeschlossen.

In einer Weiterbildung ist die Verarbeitungseinheit ferner dazu eingerichtet, unter Verwendung von Bildverarbeitungsalgorithmen, insbesondere Objekt- und Codeerkennungsalgorithmen, die Auswahl des ersten und des zweiten Bildes vorzunehmen.

Wie oben bereits beschrieben, können hier etablierte Algorithmen verwendet werden, oder bzw. zusätzlich KI-basierte Methoden. Letztere werden in einem Trainingsbetrieb mit Testbildern von mit Code versehenen Objekten darauf trainiert, den Code auszulesen, um dann anschließend Bilder auszuwählen, die den Code in geeigneter Form zeigen. Ergänzend oder zusätzlich kann eine vollständige Objekterkennung durchgeführt werden, eventuell unter Einsatz eines speziell ausgeformten Kalibrierungsobjekts. Ein Training der Kl-basierten Methode kann auch dadurch erfolgen, dass der gleiche Code zweimal oder zwei unterschiedliche Codes auf ein Trainingsobjekt angebracht wird, nämlich einmal ganz vorne und einmal ganz hinten.

In einer alternativen Weiterbildung ist in der Erfassungsvorrichtung eine Bedienund Anzeigeeinheit vorgesehen. Diese ist dazu eingerichtet, die aufgenommene Sequenz von Einzelbildern des Testobjekts sowie Auswahlkriterien anzuzeigen, insbesondere auf einer graphischen Benutzeroberfläche, und die auf bzw. mittels der Bedien- und Anzeigeeinheit durch einen Benutzer vorgenommene Auswahl des ersten und zweiten Bildes entgegenzunehmen.

Der Benutzer wird bei der Auswahl des ersten und zweiten Bildes durch die Anzeige der Auswahlkriterien unterstützt. Somit kann bei dieser Auswahl optimales Ergebnis erreicht werden, was sich vorteilhaft auf die Codeerkennung und Zuordnung zu Objekten im laufenden Betrieb auswirkt.

Das Triggerstart- und/oder Triggerstoppsignal wird beispielsweise von einem fotoelektrischer Sensor, insbesondere einer Lichtschranke, einem Ultraschall-Sensor, einem Magnetfeld-Sensor und/oder einem Drucksensor erzeugt, welcher vor einem Sichtbereich der Kamera oder angrenzend an diesen Sichtbereich der Kamera angeordnet ist. Dabei ist es besonders vorteilhaft, diesen Sensor in einem möglichst kleinen Abstand vor dem Sichtbereich der Kamera anzubringen, weil dadurch die Zuweisungssicherheit, vor allem bei einer möglicherweise variablen Fördergeschwindigkeit, weiter erhöht wird.

Alternativ oder zusätzlich kann das Triggerstart- und/oder Triggerstoppsignal auch anders erzeugt werden, beispielsweise durch eine speicherprogrammierbare Steuerung (SPS), die z.B. durch das Triggerstartsignal die Annäherung eines Objekts anzeigt.

In einer möglichen Ausgestaltungsform ist die Kamera als Einzelbildkamera, insbesondere als kamerabasierter Codeleser, ausgeführt. Zudem kann die Verarbeitungseinheit von der Kamera umfasst sein.

Die Kamera ist beispielsweise als Matrixkamera auf Basis von CMOS-Sensoren realisiert und bietet eine geeignete Auflösung, die alle gängigen Codearten identifiziert und zuverlässig decodiert. Der Abstand von einzelnen Objekten im anschließenden laufenden Betrieb ist in etwa so groß wie das Sichtfeld der Kamera. Entsprechend der Art und Weise, wie das Testobjekt oder ein Objekt im laufenden Betrieb relativ zu der Erfassungsvorrichtung befördert oder bewegt wird, ist die Kamera beispielsweise oberhalb eines Förderbandes montiert und erfasst die Objektoberseite. Die Kamera kann auch seitlich neben dem Förderband montiert sein und eine Objektseite erfassen. Die Kamera kann auch unterhalb des Förderbandes montiert sein und durch eine kleine Förderbandlücke eine Objektunterseite erfassen.

In einer Weiterbildung umfasst die Erfassungsvorrichtung mindestens eine weitere Kamera, die parallel zu der oben beschriebenen Kamera betrieben wird. Die Bilder und Auswertungen beider Kameras werden dann kombiniert, was zu einer weiteren Verbesserung der Zuweisungssicherheit und Genauigkeit führen kann.

Die Verarbeitungseinheit kann auf einem Chip der Kamera implementiert sein. Die weiter oben beschriebene Bedien- und Anzeigeeinheit ist dann beispielsweise als webbasierte Oberfläche ausgeführt und läuft auf einem beliebigen Gerät, welches über eine geeignete Verbindung, beispielsweise Ethernet oder Wireless LAN, mit der Kamera verbunden ist.

In einer Implementierung ist die Erfassungsvorrichtung dazu eingerichtet, das erfindungsgemäße Verfahren auszuführen.

Der Startzeitpunkt der Kamera kann auch den Zeitpunkt, an dem eine Selektion der Bilder im laufenden Betrieb startet, bezeichnen.

Weiterer Gegenstand der Erfindung ist ein Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren wie oben definiert insbesondere im Zusammenwirken mit der oben beschriebenen Erfassungsvorrichtung auszuführen.

Im Übrigen gelten für die Erfassungsvorrichtung sowie das Computerprogrammprodukt die Ausführungen zum erfindungsgemäßen Verfahren entsprechend. Dies betrifft insbesondere Vorteile und Ausführungsformen.

Die beschriebenen Ausführungsformen können untereinander kombiniert werden, sofern sich nicht explizit etwas anderes ergibt oder beschrieben ist.

Nachfolgend wird die Erfindung rein beispielhaft unter Bezugnahme auf die Figuren näher beschrieben. Funktions- bzw. wirkungsgleiche Zeichnungselemente tragen dabei gleiche Bezugszeichen. Es zeigen:
- Fig. 1: eine beispielhafte schematische Darstellung einer Erfassungsvorrichtung wie vorgeschlagen,
- Fig. 2: eine zweite beispielhafte schematische Darstellung der Erfassungsvorrichtung wie vorgeschlagen, und
- Fig. 3: eine beispielhafte Darstellung einer graphischen Benutzeroberfläche zur Verwendung in dem vorgeschlagenen Verfahren bzw. der vorgeschlagenen Anordnung.

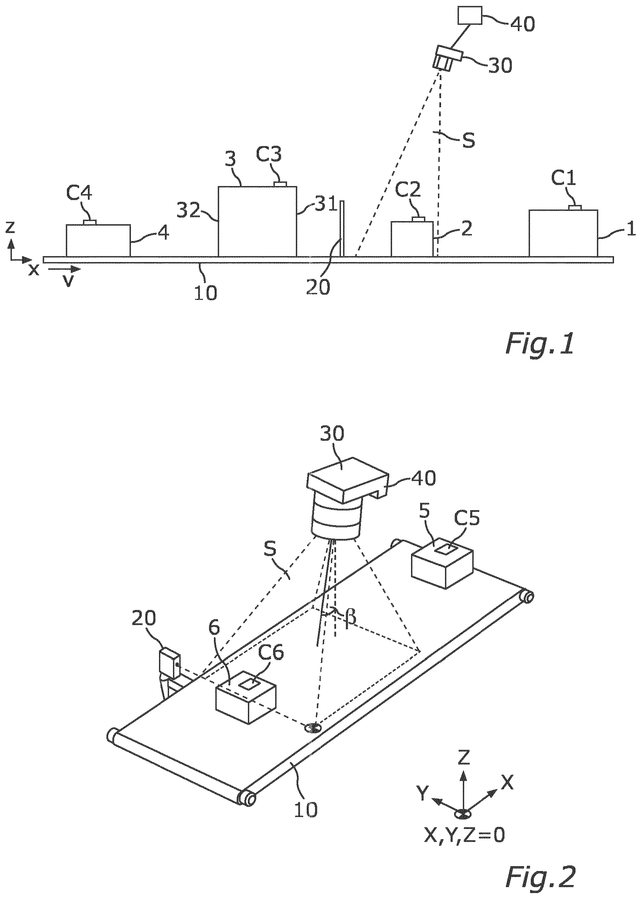

Fig. 1 zeigt eine beispielhafte schematische Darstellung einer Erfassungsvorrichtung wie vorgeschlagen. Die Erfassungsvorrichtung ist in einer Seitenansicht dargestellt. Auf einem Fördermittel, hier ein Förderband 10, werden einzelne Objekte 1, 2, 3, 4 mit einer Geschwindigkeit v in x-Richtung, also nach rechts, befördert. Jedes der vier Objekte 1, 2, 3 und 4 ist mit einem Code C1, C2, C3 und C4 wie dargestellt versehen. Ein Mittel zum Erzeugen des Triggerstart- und des Triggerstoppsignals, welche von der Erfassungsvorrichtung empfangen werden, ist hier als Lichtschranke 20 ausgeführt. Diese ist vor einem Sichtfeld S der Kamera 30 angeordnet. Die oben beschriebene erste Position befindet sich also im Bereich des Mittels zum Erzeugen des Triggerstartsignals und des Triggerstoppsignals, während die zweite Position im Sichtbereich der Kamera liegt. Das zweite Objekt 2 befindet sich gerade im Sichtfeld S der Kamera 30, welche den Code C2 des Objekts 2 liest und dem Objekt 2 zuordnet. Das Objekt 3 mit dem Code C3 befindet sich noch vor der Lichtschranke 20. Sobald die vordere Kante 31 von Objekt 3 die Lichtschranke 20 erreicht, wird das Triggerstartsignal erzeugt. Sobald die hintere Kante 32 des Objekts 3 die Lichtschranke 20 passiert, wird das Triggerstoppsignal in dem erfindungsgemäßen Verfahren erzeugt. Die Aufnahme der Bilder von Objekt 3 durch die Kamera 30 wird dann nach der konfigurierten Verzögerung gestartet und bis zum konfigurierten Aufnahmestopp fortgesetzt. Es handelt sich also um eine getriggerte Lesesituation.

Der Zeitbereich, in dem Einzelbilder im laufenden Betrieb von einem jeweiligen Objekt gemacht werden, wird mit dem erfindungsgemäßen Verfahren so konfiguriert, dass immer eine korrekte Zuweisung des erkannten Codes zum richtigen Objekt erfolgt. Dabei werden der Abstand zwischen Triggermittel 20 und Sichtfeld S der Kamera 30, sowie eine Fördergeschwindigkeit des Förderbandes 10 in dem spezifizierten Verfahren inhärent durch die Auswahl des ersten und des zweiten Bildes berücksichtigt.

Die Verarbeitungseinheit 40 ist hier separat von der Kamera 30 realisiert, jedoch in geeigneter Art und Weise mit dieser verbunden.

Fig. 2 zeigt eine zweite beispielhafte schematische Darstellung der vorgeschlagenen Erfassungsvorrichtung. Hier ist eine dreidimensionale Ansicht gezeigt. Die Objekte sind beispielsweise ein Paket 5 mit dem Code C5, sowie ein Paket 6 mit dem Code C6. Eine vordere Kante des Pakets 6 erreicht gerade den Sichtbereich S der Kamera 30, während eine hintere Kante des Pakets 6 die Lichtschranke 20 noch nicht ganz passiert hat.

Hier ist die Verarbeitungseinheit 40 mit der Kamera 30 integriert, beispielsweise als Firmware.

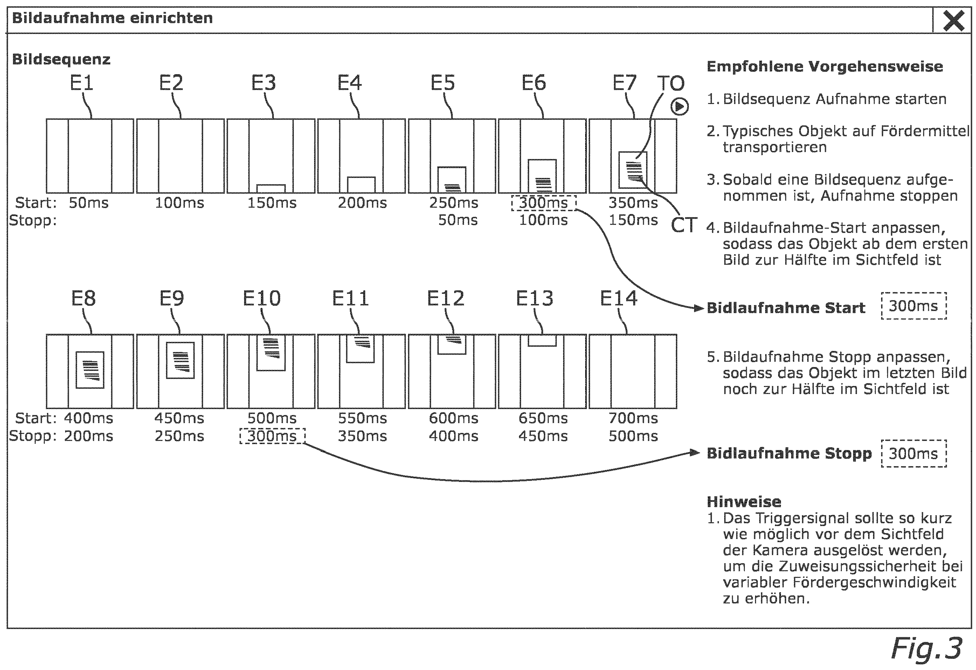

Fig. 3 zeigt eine beispielhafte Darstellung einer graphischen Benutzeroberfläche, wie sie in dem angegebenen Verfahren bzw. der angegebenen Vorrichtung eingesetzt werden kann. Im Rahmen des hier gezeigten Fensters wird der Benutzer durch die Konfiguration der Bildaufnahme in der Erfassungsvorrichtung geführt. Hierfür wird ein Testobjekt TO, welches in diesem Beispiel mit einem Code CT versehen ist, in Verbindung mit der Erfassungsvorrichtung, wie beispielsweise in Fig. 1 oder 2 gezeigt, verwendet. Im Rahmen der in dem Fenster angezeigten empfohlenen Vorgehensweise wird die Aufnahme der Bildsequenz gestartet (Punkt 1) und das Testobjekt auf dem Fördermittel transportiert (Punkt 2). Die Sequenz der Einzelbilder wird aufgenommen und anschließend die Aufnahme für die Konfiguration gestoppt (Punkt 3). Dies ist im dargestellten Beispiel bereits erfolgt und es wird die aufgenommene Bildsequenz auf der linken Seite des Fensters angezeigt. In diesem Beispiel wurden vierzehn Einzelbilder E1, E2, ..., E14 aufgenommen. Es ist zu erkennen, wie das heller dargestellte Testobjekt TO auf dem dunkler dargestellten Förderband durch die Einzelbilder E3 bis E13 wandert. Die ersten Bilder E1 und E2, sowie das letzte Bild E14 der Sequenz zeigen das Testobjekt TO noch nicht bzw. nicht mehr.

Sollte die Anzahl der Einzelbilder der Sequenz größer sein, kann eine Ansicht zum Scrollen verwendet werden.

Auf der rechten Seite des dargestellten Fensters erhält der Benutzer unter Punkt 4 und 5 nun Anweisungen bzw. Auswahlkriterien, nach denen ein erstes und ein zweites Bild auszuwählen ist. Demgemäß ist das erste Bild so auszuwählen, dass ab diesem Bild das Testobjekt TO zur Hälfte sichtbar ist. Der Benutzer wählt demzufolge Einzelbild E6. Die unter Bild E6 dargestellte und bereits ermittelte Verzögerung von 300 ms des Bildes E6 gegenüber dem Zeitpunkt des Triggerstartsignals bildet die erste Verzögerung und stellt den Aufnahmestart für den späteren laufenden Betrieb ein.

Wie auf der rechten Seite unter Punkt 5 dargestellt, konfiguriert der Benutzer anschließend das Aufnahmeende für den späteren laufenden Betrieb, indem er das letzte Bild auswählt, auf dem das Testobjekt TO noch zur Hälfte sichtbar ist. Der Benutzer entscheidet sich für Bild E10. Die zweite Verzögerung, also der zeitliche Abstand zwischen dem Aufnahmezeitpunkt des Bildes E10 und dem Triggerstoppsignal, wird hier ebenfalls als 300 ms ermittelt.

Mit dieser einfachen Vorgehensweise ist es möglich, auch ohne Fach- oder Expertenwissen die Erfassungsvorrichtung zu konfigurieren, so dass eine zuverlässige Code-zu-Objekt-Zuordnung im laufenden Betrieb sichergestellt werden kann. Aufgrund der Konfiguration der zwei Zeitpunkte, nämlich Aufnahmestart und Aufnahmestopp, ist die Konfiguration vorteilhafterweise unabhängig von der Länge eines Objekts.

### Bezugszeichenliste

- 1, 2, 3, 4, 5, 6: Objekt, Testobjekt
- 10: Fördermittel
- 20: photoelektrischer Sensor, Lichtschranke
- 30: Kamera
- 40: Verarbeitungseinheit
- C1, C2, ..., C6: Code
- CT: Code
- S: Sichtbereich
- E1, E2, ..., E14: Einzelbild
- TO: Testobjekt

## Patentansprüche

1. Verfahren zum Konfigurieren einer Erfassungsvorrichtung, die einem Objekt (1, 2, 3, 4, 5, 6), welches mit einem Code (C1, C2, C3, C4, C5, C6) zu seiner Identifizierung versehen ist und relativ zu der Erfassungsvorrichtung befördert wird, diesen Code zuordnet, das Verfahren aufweisend folgende Schritte:
Empfangen eines Triggerstartsignals,
Aufnahme einer Sequenz von Einzelbildern (E1, E2, ..., E14) eines Testobjekts (TO), welches relativ zu der Erfassungsvorrichtung befördert wird, Auswahl eines ersten und eines zweiten Bildes (E6, E10) aus der Sequenz von Einzelbildern (E1, E2, ..., E14),
Ermitteln einer ersten Verzögerung zwischen dem Empfang des Triggerstartsignals und der Aufnahme des ausgewählten ersten Bildes (E6), und
Einstellen eines Startzeitpunkts, an oder nach dem eine Aufnahme von Einzelbildern eines Objekts im laufenden Betrieb der Erfassungsvorrichtung gestartet wird, in Abhängigkeit der ersten Verzögerung,
**dadurch gekennzeichnet, dass**
die Auswahl des ersten und des zweiten Bildes gemäß mindestens eines einstellbaren Kriteriums erfolgt, und wobei das mindestens eine einstellbare Kriterium so definiert ist, dass das erste ausgewählte Bild (E6) in etwa eine erste Hälfte des Bildes des Testobjekts (TO) beinhaltet und wobei das zweite ausgewählte Bild (E10) in etwa eine zweite Hälfte des Bildes des Testobjekts (TO) beinhaltet.

2. Verfahren nach Anspruch 1,
wobei ein Aufnahmeende, an oder vor dem die Aufnahme von Einzelbildern desselben Objekts im laufenden Betrieb beendet wird, voreingestellt ist, oder wobei das Aufnahmeende in Abhängigkeit einer zweiten Verzögerung zwischen dem Empfang des Triggerstartsignals oder eines zusätzlich empfangenen Triggerstoppsignals und dem zweiten ausgewählten Bild eingestellt wird.

3. Verfahren nach Anspruch 2,
wobei das Triggerstartsignal eine Annäherung des Testobjekts oder eines Objekts, insbesondere die Annäherung eines Beginns (31) des Testobjekts oder des Objekts, an die Erfassungsvorrichtung signalisiert, und wobei das Triggerstoppsignal ein Ende (32) des Testobjekts oder des Objekts signalisiert.

4. Verfahren nach einem der vorstehenden Ansprüche,
wobei die Aufnahme der Sequenz von Einzelbildern (E1, E2, ..., E14) des Testobjekts (TO) unmittelbar nach dem Empfangen des Triggerstartsignals beginnt und nach einer vordefinierten Zeit oder Anzahl aufgenommener Einzelbilder (E1, E2, ..., E14) endet.

5. Verfahren nach einem der vorstehenden Ansprüche,
wobei das Testobjekt (TO) und/oder das Objekt (1, 2, 3, 4, 5, 6) durch ein Fördermittel (10) durch die Erfassungsvorrichtung hindurch oder daran vorbei befördert wird, insbesondere wird das Testobjekt und/oder das Objekt (1, 2, 3, 4, 5, 6) von einer ersten Position, in der zumindest das empfangene Triggerstartsignal erzeugt wird, zu einer zweiten Position, in der die Aufnahme der Sequenz von Einzelbildern (E1, E2, ..., E14) erfolgt, befördert,
wobei das Fördermittel (10) als Förderband, Roboter, fahrerloses Transportfahrzeug, Gabelstapler oder Hubwagen ausgeführt ist.

6. Verfahren nach einem der vorstehenden Ansprüche,
wobei die Auswahl des ersten und des zweiten Bildes (E6, E10) aus der Sequenz von Einzelbildern (E1, E2, ..., E14) durch einen Benutzer, insbesondere mittels einer grafischen Benutzeroberfläche, oder automatisiert unter Verwendung von Bildverarbeitungsalgorithmen, insbesondere Objektund Codeerkennungsalgorithmen, erfolgt.

7. Verfahren nach dem vorstehenden Anspruch,
wobei die Auswahl des ersten und des zweiten Bildes (E6, E10) aus der Sequenz von Einzelbildern (E1, E2, ..., E14) durch den Benutzer folgende Schritte umfasst:
Anzeigen aller Bilder der aufgenommenen Sequenz von Einzelbildern (E1, E2, ..., E14) des Testobjekts (TO), insbesondere in einem Fenster der grafischen Benutzeroberfläche,
Anzeigen von Auswahlkriterien, insbesondere in dem oder einem weiteren Fenster der garfischen Benutzeroberfläche,
Auswählen des ersten und des zweiten Bildes (E6, E10) aus den angezeigten Bildern gemäß den Auswahlkriterien durch den Benutzer, insbesondere mittels Tastatur, Maus, berührungsempfindlichem Bildschirm und/oder Spracheingabe.

8. Verfahren nach einem der vorstehenden Ansprüche,
wobei die erste und/oder die zweite Verzögerung durch eine zeitliche Verzögerung oder eine räumliche Distanz realisiert wird.

9. Erfassungsvorrichtung, die dazu eingerichtet ist, einem Objekt (1, 2, 3, 4, 5, 6), welches mit einem Code (C1, C2, C3, C4, C5, C6) zu seiner Identifizierung versehen ist und relativ zu der Erfassungsvorrichtung, befördert wird, diesen Code zuzuordnen,
wobei die Erfassungsvorrichtung folgendes umfasst:
ein Mittel zum Empfangen zumindest eines Triggerstartsignals,
eine Kamera (30), die dazu eingerichtet ist, eine Sequenz von Einzelbildern (E1, E2, ..., E14) eines Testobjekts (TO), welches relativ zu der Erfassungsvorrichtung befördert wird, aufzunehmen,
eine Verarbeitungseinheit (40), die dazu eingerichtet ist, auf Basis einer Auswahl eines ersten und eines zweiten Bildes (E6, E10) aus der Sequenz von Einzelbildern (E1, E2, ..., E14) zumindest eine erste Verzögerung zu ermitteln und einen Startzeitpunkt der Kamera (30), an oder nach dem eine Aufnahme von Einzelbildern eines Objekts im laufenden Betrieb der Erfassungsvorrichtung gestartet wird, einzustellen,
wobei die erste Verzögerung in Abhängigkeit des Triggerstartsignals und der Aufnahme des ausgewählten ersten Bildes (E6) ermittelt ist,
wobei der Startzeitpunkt in Abhängigkeit der ersten Verzögerung eingestellt ist,
**dadurch gekennzeichnet, dass**
die Auswahl des ersten und des zweiten Bildes gemäß mindestens eines einstellbaren Kriteriums erfolgt, und wobei das mindestens eine einstellbare Kriterium so definiert ist, dass das erste ausgewählte Bild (E6) in etwa eine erste Hälfte des Bildes des Testobjekts (TO) beinhaltet und wobei das zweite ausgewählte Bild (E10) in etwa eine zweite Hälfte des Bildes des Testobjekts (TO) beinhaltet.

10. Erfassungsvorrichtung nach dem vorstehenden Anspruch,
wobei ein Aufnahmeende, an oder vor dem die Aufnahme von Einzelbildern desselben Objekts im laufenden Betrieb beendet wird, voreingestellt ist, oder wobei die Verarbeitungseinheit (40) weiter dazu eingerichtet ist, das Aufnahmeende in Abhängigkeit einer zweiten Verzögerung zwischen dem Empfang des Triggerstartsignals oder eines zusätzlich empfangenen Triggerstoppsignals und dem zweiten ausgewählten Bild einzustellen.

11. Erfassungsvorrichtung nach dem vorstehenden Anspruch,
wobei die Verarbeitungseinheit (40) ferner dazu eingerichtet ist, unter Verwendung von Bildverarbeitungsalgorithmen, insbesondere Objekt - und Codeerkennungsalgorithmen, die Auswahl des ersten und des zweiten Bildes (E6, E10) vorzunehmen.

12. Erfassungsvorrichtung nach einem der Ansprüche 9-11,
weiter aufweisend eine Bedien- und Anzeigeeinheit, die dazu eingerichtet ist, die aufgenommene Sequenz von Einzelbildern (E1, E2, ..., E14) des Testobjekts (TO) sowie Auswahlkriterien anzuzeigen, insbesondere auf bzw. mittels einer grafischen Benutzeroberfläche, und die auf der Bedienund Anzeigeeinheit durch einen Benutzer anhand der Auswahlkriterien vorgenommene Auswahl des ersten und zweiten Bildes (E6, E10) entgegen zu nehmen.

13. Erfassungsvorrichtung nach einem der Ansprüche 9 bis 12,
wobei die Kamera (30) als Einzelbildkamera, insbesondere als kamerabasierter Codeleser, ausgeführt ist, und/oder wobei die Verarbeitungseinheit (40) von der Kamera (30) umfasst ist.

14. Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren gemäß einem der Ansprüche 1 bis 8 insbesondere im Zusammenwirken mit der Erfassungsvorrichtung gemäß einem der Ansprüche 9 bis 13 auszuführen.

## Claims

1. A method for configuring a detection device that assigns a code (C1, C2, C3, C4, C5, C6) to an object (1, 2, 3, 4, 5, 6) which is provided with said code for its identification and which is being conveyed relative to the detection device, the method comprising the following steps:
receiving a trigger start signal,
capturing a sequence of individual images (E1, E2, ..., E14) of a test object (TO) which is being conveyed relative to the detection device,
selecting a first and a second image (E6, E10) from the sequence of individual images (E1, E2, ..., E14),
determining a first delay between the reception of the trigger start signal and the capture of the selected first image (E6), and
setting a start time, at or after which a capture of individual images of an object is initiated during ongoing operation of the detection device, as a function of the first delay,
**characterized in that**
the selection of the first and the second image is performed according to at least one adjustable criterion, and with the at least one adjustable criterion being defined such that the first selected image (E6) comprises approximately a first half of the image of the test object (TO) and with the second selected image (E10) comprising approximately a second half of the image of the test object (TO).

2. A method according to claim 1,
wherein an end of capture, at or before which the capture of individual images of the same object is terminated during ongoing operation, is preset, or wherein the end of capture is set as a function of a second delay between the reception of the trigger start signal or an additionally received trigger stop signal and the second selected image.

3. A method according to claim 2,
wherein the trigger start signal signals an approach of the test object or an object - in particular the approach of a beginning (31) of the test object or the object - to the detection device, and wherein the trigger stop signal signals an end (32) of the test object or the object.

4. A method according to any one of the preceding claims,
wherein the capture of the sequence of individual images (E1, E2, ..., E14) of the test object (TO) begins immediately after receiving the trigger start signal and ends after a predefined time or number of captured individual images (E1, E2, ..., E14).

5. A method according to any one of the preceding claims,
wherein the test object (TO) and/or the object (1, 2, 3, 4, 5, 6) is/are conveyed by a conveying means (10) through or past the detection device; in particular, the test object and/or the object (1, 2, 3, 4, 5, 6) is/are conveyed from a first position, in which at least the received trigger start signal is generated, to a second position, in which the capturing of the sequence of individual images (E1, E2, ..., E14) is performed, wherein the conveying means (10) is designed as a conveyor belt, robot, automated guided vehicle, forklift, or pallet jack.

6. A method according to any one of the preceding claims,
wherein the selection of the first and the second image (E6, E10) from the sequence of individual images (E1, E2, ..., E14) is performed by a user, in particular via a graphical user interface, or in an automated manner using image processing algorithms, in particular object and code recognition algorithms.

7. A method according to the preceding claim,
wherein the selection of the first and the second image (E6, E10) from the sequence of individual images (E1, E2, ..., E14) by the user comprises the following steps:
displaying all images of the captured sequence of individual images (E1, E2, ..., E14) of the test object (TO), in particular in a window of the graphical user interface,
displaying selection criteria, in particular in the window or a further window of the graphical user interface,
selecting the first and the second image (E6, E10) from the displayed images according to the selection criteria by the user, in particular by means of a keyboard, mouse, touch-sensitive screen and/or voice input.

8. A method according to any one of the preceding claims,
wherein the first and/or the second delay is/are realized by a temporal delay or a spatial distance.

9. A detection device which is configured to assign a code (C1, C2, C3, C4, C5, C6) to an object (1, 2, 3, 4, 5, 6) which is provided with said code for its identification and which is being conveyed relative to the detection device, wherein the detection device comprises the following:
a means for receiving at least one trigger start signal,
a camera (30) which is configured to capture a sequence of individual images (E1, E2, ..., E14) of a test object (TO) which is being conveyed relative to the detection device,
a processing unit (40) which is configured to determine, based on a selection of a first and a second image (E6, E10) from the sequence of individual images (E1, E2, ..., E14), at least a first delay and to set a start time of the camera (30) at or after which a capture of individual images of an object is initiated during ongoing operation of the detection device, wherein the first delay is determined as a function of the trigger start signal and the capture of the selected first image (E6),
wherein the start time is set as a function of the first delay,
**characterized in that**
the selection of the first and the second image is performed according to at least one adjustable criterion, and with the at least one adjustable criterion being defined such that the first selected image (E6) comprises approximately a first half of the image of the test object (TO) and with the second selected image (E10) comprising approximately a second half of the image of the test object (TO).

10. A detection device according to the preceding claim,
wherein an end of capture, at or before which the capture of individual images of the same object is terminated during ongoing operation, is preset, or wherein the processing unit (40) is further configured to set the end of capture as a function of a second delay between the reception of the trigger start signal or an additionally received trigger stop signal and the second selected image.

11. A detection device according to the preceding claim,
wherein the processing unit (40) is further configured to perform the selection of the first and the second image (E6, E10) using image processing algorithms, in particular object and code recognition algorithms.

12. A detection device according to any one of the claims 9-11,
further comprising an operating and display unit which is configured to display the captured sequence of individual images (E1, E2, ..., E14) of the test object (TO) as well as selection criteria, in particular on or via a graphical user interface, and to accept the selection of the first and second image (E6, E10) made by a user on the operating and display unit based on the selection criteria.

13. A detection device according to any one of the claims 9 to 12,
wherein the camera (30) is designed as a single-image camera, in particular as a camera-based code reader, and/or wherein the processing unit (40) is included in the camera (30).

14. A computer program product comprising a computer-readable storage medium on which a program is stored that enables a computer, after the program has been loaded into a memory of the computer, to perform the method according to any one of the claims 1 to 8, in particular in cooperation with the detection device according to any one of the claims 9 to 13.

## Revendications

1. Procédé de configuration d'un dispositif de détection qui attribue un code (C1, C2, C3, C4, C5, C6) à un objet (1, 2, 3, 4, 5, 6) muni dudit code pour son identification et transporté par rapport au dispositif de détection, le procédé comprenant les étapes suivantes :
réception d'un signal de déclenchement de démarrage,
l'acquisition d'une séquence d'images individuelles (E1, E2, ..., E14) d'un objet test (TO) qui est transporté par rapport au dispositif de détection,
sélection d'une première et d'une deuxième image (E6, E10) parmi la séquence d'images individuelles (E1, E2, ..., E14),
détermination d'un premier délai entre la réception du signal de déclenchement de démarrage et la prise de la première image sélectionnée (E6), et
réglage d'un instant de démarrage, auquel ou après lequel une prise de vue d'images individuelles d'un objet est lancée pendant le fonctionnement du dispositif de détection, en fonction du premier délai,
**caractérisé en ce que**
la sélection des première et deuxième images s'effectue selon au moins un critère réglable, et ledit au moins un critère réglable étant défini de telle sorte que la première image sélectionnée (E6) comprenne approximativement une première moitié de l'image de l'objet test (TO) et
que la deuxième image sélectionnée (E10) comprenne approximativement une deuxième moitié de l'image de l'objet test (TO).

2. Procédé selon la revendication 1,
dans lequel une fin d'acquisition, à laquelle ou avant laquelle l'acquisition d'images individuelles du même objet est terminée pendant le fonctionnement, est prédéfinie,
ou dans lequel la fin de l'acquisition est réglée en fonction d'un deuxième délai entre la réception du signal de déclenchement de démarrage ou d'un signal de déclenchement d'arrêt reçu en plus et la deuxième image sélectionnée.

3. Procédé selon la revendication 2,
le signal de déclenchement de démarrage signalant l'approche de l'objet test ou d'un objet, en particulier une approche d'un début (31) de l'objet test ou de l'objet, vers le dispositif de détection, et le signal de déclenchement d'arrêt signalant une fin (32) de l'objet test ou de l'objet.

4. Procédé selon l'une des revendications précédentes,
dans lequel l'acquisition de la séquence d'images individuelles (E1, E2, ..., E14) de l'objet test (TO) commence immédiatement après la réception du signal de déclenchement de démarrage et se termine après un temps prédéfini ou un nombre prédéfini d'images individuelles (E1, E2, ..., E14) acquises.

5. Procédé selon l'une des revendications précédentes,
dans lequel l'objet test (TO) et/ou l'objet (1, 2, 3, 4, 5, 6) est transporté par un moyen de transport (10) à travers le dispositif de détection ou devant celui-ci, en particulier l'objet test et/ou l'objet (1, 2, 3, 4, 5, 6) est transporté d'une première position, dans laquelle au moins le signal de déclenchement de démarrage reçu est généré, vers une deuxième position, dans laquelle l'acquisition de la séquence d'images individuelles (E1, E2, ..., E14) a lieu, le moyen de transport (10) étant réalisé sous la forme d'un tapis roulant, d'un robot, d'un véhicule de transport sans conducteur, d'un chariot élévateur à fourche ou d'un transpalette.

6. Procédé selon l'une des revendications précédentes,
dans lequel la sélection des première et deuxième images (E6, E10) à partir de la séquence d'images individuelles (E1, E2, ..., E14) est effectuée par un utilisateur, en particulier au moyen d'une interface utilisateur graphique, ou de manière automatisée à l'aide d'algorithmes de traitement d'images, en particulier d'algorithmes de reconnaissance d'objets et de codes.

7. Procédé selon la revendication précédente,
dans lequel la sélection de la première et de la deuxième image (E6, E10) à partir de la séquence d'images individuelles (E1, E2, ..., E14) par l'utilisateur comprend les étapes suivantes :
affichage de toutes les images de la séquence acquise d'images individuelles (E1, E2, ..., E14) de l'objet test (TO), en particulier dans une fenêtre de l'interface utilisateur graphique,
affichage de critères de sélection, en particulier dans cette fenêtre ou dans une autre fenêtre de l'interface utilisateur graphique,
sélection par l'utilisateur de la première et de la deuxième image (E6, E10) parmi les images affichées, conformément aux critères de sélection, en particulier à l'aide d'un clavier, d'une souris, d'un écran tactile et/ou d'une commande vocale.

8. Procédé selon l'une des revendications précédentes,
dans lequel le premier et/ou le deuxième délai est réalisé par un retard temporel ou une distance spatiale.

9. Dispositif de détection agencé pour attribuer un code (C1, C2, C3, C4, C5, C6) à un objet (1, 2, 3, 4, 5, 6) muni dudit code pour son identification et transporté par rapport au dispositif de détection,
le dispositif de détection comprenant :
un moyen destiné à recevoir au moins un signal de déclenchement de démarrage,
une caméra (30) agencée pour acquérir une séquence d'images individuelles (E1, E2, ..., E14) d'un objet test (TO) qui est transporté par rapport au dispositif de détection,
une unité de traitement (40) agencée pour, sur la base d'une sélection d'une première et d'une deuxième image (E6, E10) parmi la séquence d'images individuelles (E1, E2, ..., E14), de déterminer au moins un premier délai et de régler un instant de démarrage de la caméra (30) à partir duquel ou après lequel une prise de vue d'images individuelles d'un objet est lancée pendant le fonctionnement du dispositif de détection,
le premier délai étant déterminé en fonction du signal de déclenchement de démarrage et de la prise de la première image sélectionnée (E6),
l'instant de démarrage étant réglé en fonction du premier délai,
**caractérisé en ce que**
la sélection de la première et de la deuxième image s'effectue selon au moins un critère réglable, et ce au moins un critère réglable étant défini de telle sorte que la première image sélectionnée (E6) comprenne approximativement une première moitié de l'image de l'objet test (TO) et que la deuxième image sélectionnée (E10) comprenne approximativement une deuxième moitié de l'image de l'objet test (TO).

10. Dispositif de détection selon la revendication précédente,
dans lequel une fin d'acquisition, à laquelle ou avant laquelle l'acquisition d'images individuelles du même objet est terminée pendant le fonctionnement, est prédéfinie,
ou dans lequel l'unité de traitement (40) est en outre agencée pour régler la fin de l'acquisition en fonction d'un deuxième délai entre la réception du signal de déclenchement de démarrage ou d'un signal de déclenchement d'arrêt reçu en plus et la deuxième image sélectionnée.

11. Dispositif de détection selon la revendication précédente,
dans lequel l'unité de traitement (40) est en outre agencée pour effectuer la sélection des première et deuxième images (E6, E10) à l'aide d'algorithmes de traitement d'images, en particulier d'algorithmes de reconnaissance d'objets et de codes.

12. Dispositif de détection selon l'une des revendications 9 à 11, comprenant en outre une unité de commande et d'affichage qui est agencée pour afficher la séquence acquise d'images individuelles (E1, E2, ..., E14) de l'objet test (TO) ainsi que des critères de sélection, en particulier sur ou au moyen d'une interface utilisateur graphique, et à recevoir la sélection de la première et de la deuxième image (E6, E10) effectuée par un utilisateur sur l'unité de commande et d'affichage à l'aide des critères de sélection.

13. Dispositif de détection selon l'une des revendications 9 à 12,
dans lequel la caméra (30) est réalisée sous la forme d'une caméra à image unique, en particulier d'un lecteur de codes basé sur une caméra, et/ou dans lequel l'unité de traitement (40) est intégrée à la caméra (30).

14. Produit de programme informatique comprenant un support de stockage lisible par ordinateur sur lequel est enregistré un programme qui permet à un ordinateur, après chargement du programme dans une mémoire de l'ordinateur, d'exécuter le procédé selon l'une des revendications 1 à 8, en particulier en coopération avec le dispositif de détection selon l'une des revendications 9 à 13.
